(19) **Europäisches Patentamt**

**European Patent Office**

**Office européen des brevets**

(11) **EP 1 178 639 A1**

(12) **EUROPEAN PATENT APPLICATION**
published in accordance with Art. 158(3) EPC

| | |
|---|---|
| (43) Date of publication:<br>**06.02.2002 Bulletin 2002/06** | (51) Int Cl.⁷: **H04L 27/20**, H04B 7/005,<br>**H04B 7/26** |
| (21) Application number: **01912183.9** | (86) International application number:<br>**PCT/JP01/01807** |
| (22) Date of filing: **08.03.2001** | (87) International publication number:<br>**WO 01/69877 (20.09.2001 Gazette 2001/38)** |

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **HASHIMOTO, Kazunari**<br>  **Komatsu-shi, Ishikawa 923-0064 (JP)**<br>• **FUTAGI, Sadaki**<br>  **Ishikawa-gun, Ishikawa 929-0224 (JP)**<br>• **UESUGI, Mitsuru**<br>  **Yokosuka-shi, Kanagawa 238-0048 (JP)** |
| (30) Priority: **13.03.2000 JP 2000068427** | |
| (71) Applicant: **MATSUSHITA ELECTRIC INDUSTRIAL CO., LTD.**<br>**Kadoma-shi, Osaka 571-8501 (JP)** | (74) Representative:<br>**Grünecker, Kinkeldey, Stockmair & Schwanhäusser Anwaltssozietät**<br>**Maximilianstrasse 58**<br>**80538 München (DE)** |

(54) **TRANSMISSION GAIN REGULATING METHOD AND RADIO DEVICE**

(57) To prevent deterioration of the reception characteristic of communication partner station without increasing the circuit scale of the radio apparatus. Amplitude of a transmission signal subjected to inverse equalization processing by an inverse equalization processor 104 that provides a characteristic, which is opposite to a distortion characteristic on the radio propagation path received at a signal receiving time, with respect to the transmission signal is controlled based on any one of a square sum of all tap coefficient values of a digital filter, which is a channel estimation value, a square root of square sum, or a sum of absolute values.

FIG.10

## Description

Technical Field

The present invention relates to an appropriate transmission gain controlling method and a radio apparatus, which are used in a base station apparatus and a mobile station apparatus with TDD (Time Division Duplex) communication system.

Background Art

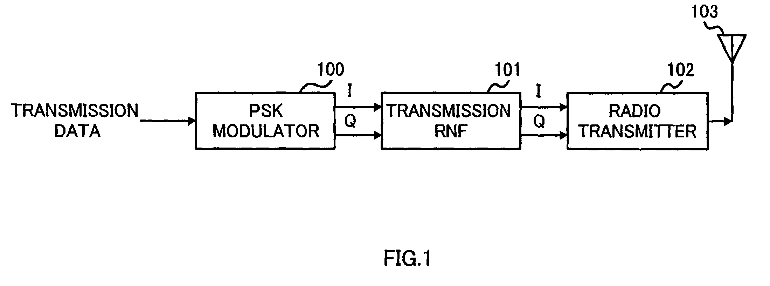

FIG. 1 is a block diagram illustrating the configuration of a conventional radio apparatus. This conventional radio apparatus has no inverse equalization processing function to be described later.

This radio apparatus comprises a PSK (Phase Shifting Keying) modulator 100 that provides phase modulation to transmission data, a transmission RNF (Root Nyquist Filter) 101 that provides root Nyquist filter processing to the signal subjected to phase modulation by the PSK modulator 100, a radio transmitter 102 that provides quadrature modulation to the output of the transmission RNF 101 to upconvert the resultant to a carrier frequency, and an antenna 103 that emits the radio signal outputted from the radio transmitter 102 to the air.

This radio apparatus provides phase modulation and root Nyquist filter processing to transmission data to perform transmission to allow data with no distortion to be transmitted. However, since transmission data is easily affected on a radio propagation path by fading, transmission data generally results in a distorted received signal at a receiving side.

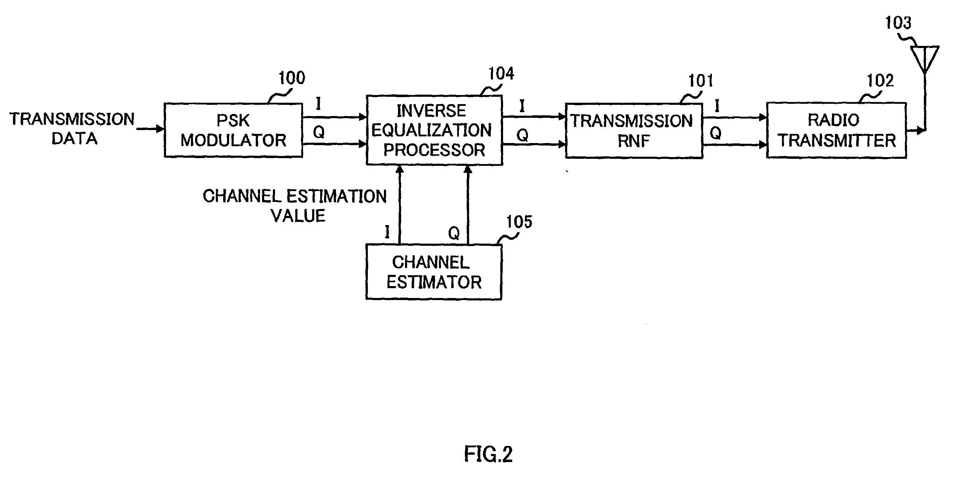

While, FIG. 2 is a block diagram illustrating the configuration of the conventional radio apparatus having an inverse equalization processing function. This radio apparatus is one that has an inverse equalization processor 104 added to the radio apparatus of FIG. 1. The inverse equalization processor 104 provides a characteristic, which is opposite to a distortion characteristic on the radio propagation path received at a signal receiving time, with respect to the transmission signal subjected to phase modulation by the PSK modulator 100 using a channel estimation value from a channel estimator 105. The channel estimator 105 estimates the distortion characteristic on the radio propagation path from the received signal of a unique word interval (unique word is information that is recognized by both the base station and the mobile station to establish synchronization) so as to obtain a channel estimation value.

Thus, this radio apparatus is different from the radio apparatus of FIG. 1 in the point that inverse equalization processing to the transmission signal subjected to phase modulation. However, the provision of inverse equalization processing is substantially the same as the addition of distortion to the transmission signal, and only when the added distortion indicates the inverse characteristic with respect to the distortion characteristic on the radio propagation path, the receiving side receives a signal with no distortion.

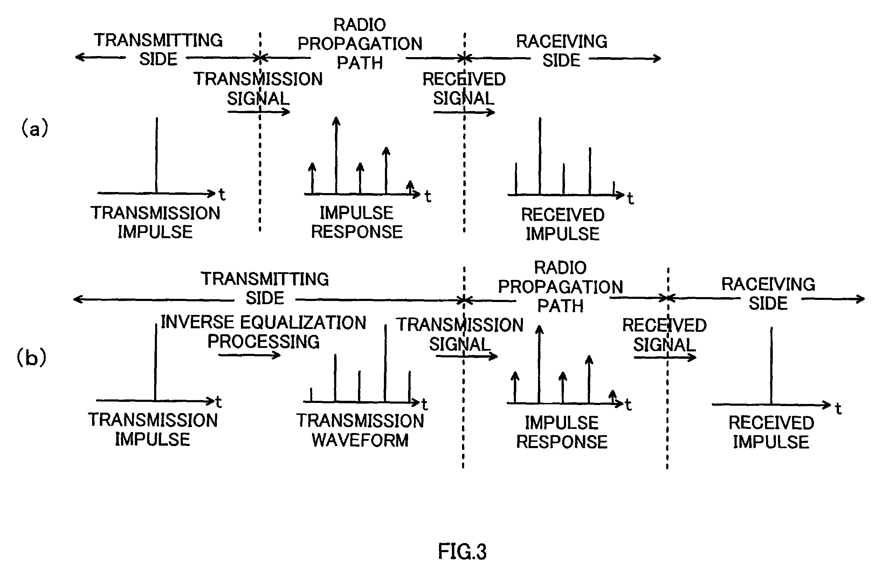

Hereinafter, with reference to FIG. 3, an explanation is given of the operation of each of the radio apparatuses illustrated in FIGS. 1 and 2 with the assumption that a transmission wave is a unit impulse.

FIG. 3(a) is a waveform view illustrating an impulse response in the radio apparatus having no inverse equalization processing function. When the radio apparatus having no inverse equalization processing function transmits a unit impulse, a receiving side receives a pulse as illustrated in the figure in connection with a signal through the impulse response of the radio propagation path. FIG. 3(b) is a waveform view illustrating an impulse response in the radio apparatus having an inverse equalization processing function. The radio apparatus having an inverse equalization processing function provides inverse equalization processing to give a characteristic, which is opposite to the impulse response of the radio propagation path, before transmitting a unit impulse. For this reason, the receiving side receives a pulse (received pulse of unit impulse) as illustrated in the figure in connection with the signal through the impulse response of the radio propagation path.

An explanation will be next given of a fading model when the multipath number is 2.

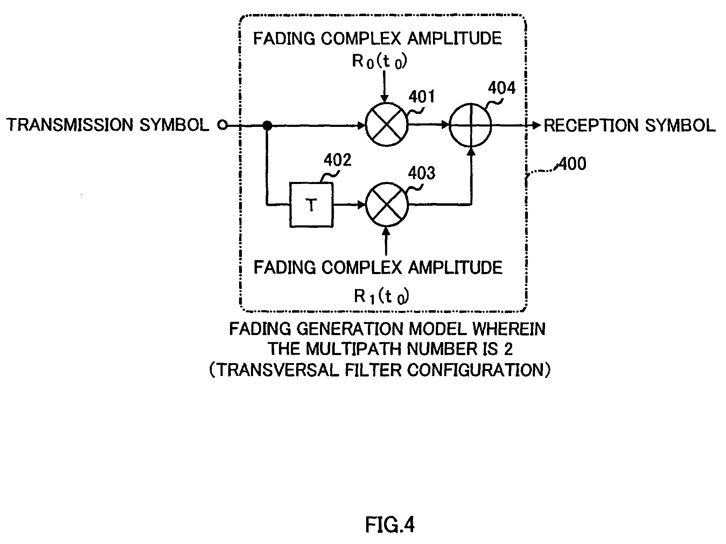

FIG. 4 is a block diagram illustrating the configuration of the same model. In this figure, a fading model generation model 400 has a transversal filter configuration. A transmission symbol is multiplied by a fading complex amplitude $R_0(t_0)$ by a multiplier 401. Also, a transmission symbol is delayed by one symbol by a delayer 402 and one-symbol delayed transmission symbol is multiplied by a fading complex amplitude $R_1(t_0)$ by a multiplier 403. An adder 404 adds the result obtained by multiplying the transmission symbol by the fading complex amplitude $R_0(t_0)$ by the multiplier 401 and the result obtained by multiplying the one-symbol delayed transmission symbol by the fading complex amplitude $R_1(t_0)$ by the multiplier 402. A signal obtained by the addition is outputted as fading (namely, reception symbol) wherein the multipath number is 2.

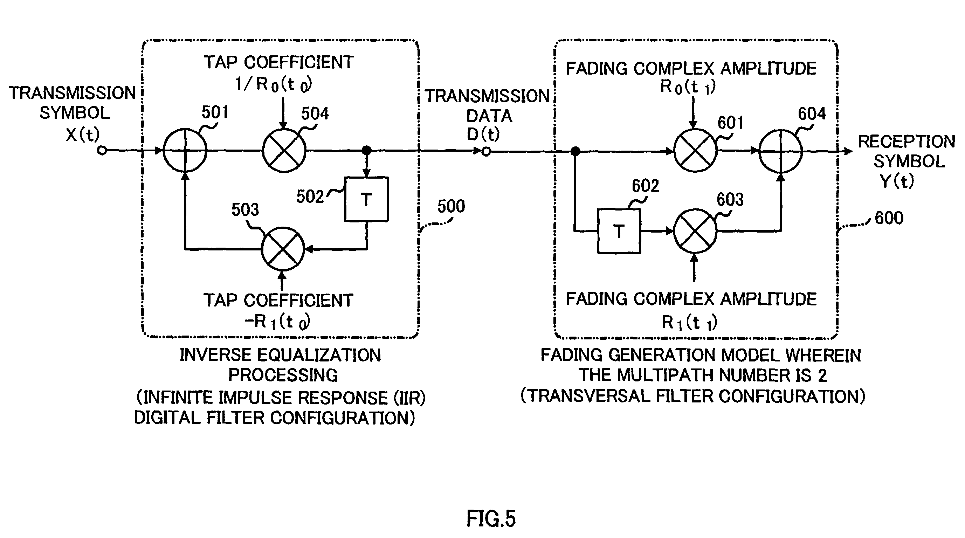

While, FIG. 5 is a block diagram illustrating a model that provides inverse equalization processing to perform transmission. In this figure, an inverse equalization processor 500 has a Infinite Impulse Response (IIR) digital filter configuration composed of an adder 501, delayer 502, and multipliers 503, 504.

Here, it is assumed that the signal generated by the fading model generation model 400 is received and a distortion characteristic on the radio propagation path at time $t_0$ is estimated from the received signal of the unique word section to obtain fading complex amplitude $R_0(t_0)$ and fading complex amplitude $R_1(t_0)$. If the tap coefficients of inverse equalization processor 500 are set to $1/R_0(t_0)$ and $-R_1(t_0)$ based on the obtained

fading complex amplitude $R_0(t_0)$ and fading complex amplitude $R_1(t_0)$, transmission symbol X(t) is subjected to inverse equalization processing, resulting in transmission D(t). Transmission data D(t) can be expressed by the following equation:

$$D(t)=\{X(t)- R_1(t_0) \cdot D(t-1)\} \cdot (1/R_0(t_0))$$

$$= (1/R_0(t_0) \cdot X(t))-((R_1(t_0)/R_0(t_0)) \cdot D(t-1) \quad (1)$$

Equation (1) can be also expressed as follows:

$$X(t)= = R_0(t_0) \cdot D(t)+R_1(t_0) \cdot D(t-1) \quad (2)$$

Reception symbol Y(t) can be expressed using transmission data D(t) at data transmission time $t_1$ as follows:

$$Y(t) = R_0(t_1) \cdot D(t)+R_1(t_1) \cdot D(t-1) \quad (3)$$

If $R_0(t_0)=R_0(t_1)$ and $R_1(t_0)=R_1(t_1)$ are established, the following equation (4) can be obtained.

$$Y(t)=X(t) \quad (4)$$

Namely, TDD period is sufficiently faster than a variation in fading, a change in fading complex amplitude can be ignored, making it possible for reception symbol Y (t) to receive transmission symbol X(t) having no distortion directly.

In addition, similar to FIG 4, a fading model generation model 600 wherein the multipath number is 2 illustrated in FIG. 5 has a transversal filter configuration composed of multipliers 601, 603, delayer 602, and adder 604.

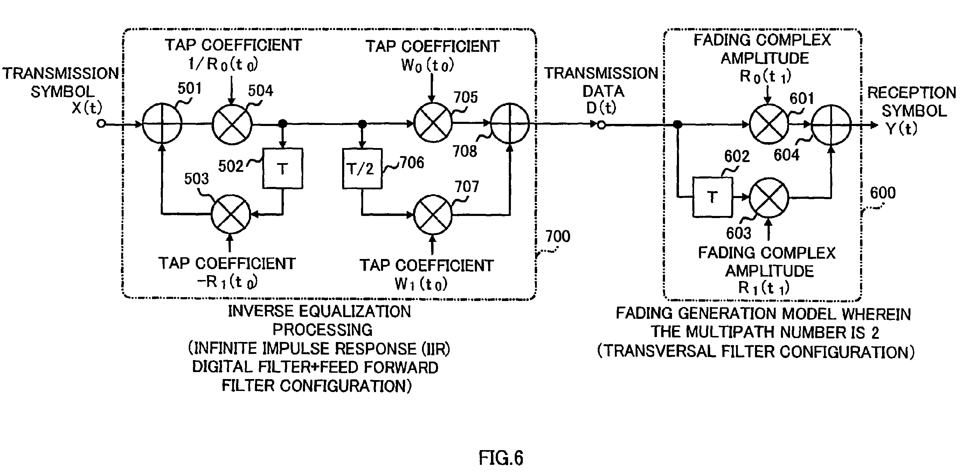

Next, FIG. 6 is a block diagram illustrating a model in which a feed-forward filter (FFF) is added to the inverse equalization processor 500 of FIG. 5 to compensate for a phase shift of a main wave and deterioration in the characteristic, which is caused when reproduced clock jitter of a communication partner and bit synchronization are correctly obtained. In this case, a tap interval of the feed-forward filter is set to a fractional interval to absorb reproduced clock jitter. The model of this figure uses the combination of Infinite Impulse Response(IIR) digital filter and feed-forward filter as an inverse equalization processor.

The reason why the tap interval of the feed-forward filter is set to the fractional interval is as follows:

Namely, there is a case in which the clock is shifted by 1/2 symbol from the original symbol timing and reproduced due to timing jitter of received/reproduced clock. In this case, the weight of tap coefficient of feed-forward filter is shifted by 1/2 (estimation is actually performed in the form that the tap coefficient estimated by the channel estimator is shifted by 1/2), whereby correcting timing even if jitter is present in the received/reproduced clock. In other words, the tap interval represents the interval where timing correction is possible. Whether timing jitter can be absorbed or not depends on whether the tap interval is the symbol interval, 1/2 symbol interval, or 1/4 symbol interval. Accordingly, the use of fractional interval instead of the symbol interval makes it possible to not only improve resolution of a delayed wave but also absorb jitter of received/reproduced clock.

By the way, in the conventional radio apparatus having the inverse equalization processing function, the dynamic range is widened due to the provision of inverse equalization processing, each section after inverse equalization processing needs performance accordingly. This increases the circuit scale and requires high performance of the digital/analog converter to cause a problem in high cost.

In other words, the provision of inverse equalization processing is substantially the same as the addition of distortion to the transmission signal. As compared with the radio apparatus having no inverse equalization processing, a wider dynamic range is required for the transmission signal by the amount of distortion added at the time of transmission. Thus, the transmitting circuits after inverse equalization processing also need performance to maintain the dynamic range, and this increases cost to satisfy the performance inevitably.

Moreover, in the conventional radio apparatus having the inverse equalization processing function, when inverse equalization processing is performed based on the estimation of distortion characteristic on the radio propagation path, amplitude of the transmission subjected to inverse equalization processing decreases in some cases. This causes a problem in which SNR (Signal to Noise Ratio) of the transmission signal deteriorates. When SNR (Signal to Noise Ratio) of the transmission signal deteriorates, the reception characteristic of communication partner station also deteriorates.

Disclosure of Invention

It is an object of the present invention is to provide an appropriate transmission gain controlling method and a radio apparatus capable of preventing deterioration of the reception characteristic of communication partner station without increasing the circuit scale of the radio apparatus.

This object can be attained by controlling amplitude of a transmission signal subjected to inverse equalization processing by inverse equalization processing that provides a characteristic, which is opposite to a distortion characteristic on the radio propagation path received at a signal receiving time, with respect to the transmission signal based on a channel estimation.

Brief Description of Drawings

FIG. 1 is a block diagram illustrating the configuration of a conventional radio apparatus;
FIG. 2 is a block diagram illustrating the configuration of the conventional radio apparatus;
FIG. 3 is a view illustrating a reception/ transmission pulse waveform in inverse equalization processing;
FIG. 4 is a block diagram illustrating a fading generation model wherein the multipath number is 2;
FIG. 5 is a block diagram illustrating a configuration that provides inverse equalization processing to perform transmission;
FIG. 6 is a block diagram illustrating a configuration that provides inverse equalization processing to perform transmission;
FIG. 7 is a block diagram illustrating the configuration of a radio apparatus according to a first embodiment of the present invention;
FIG. 8 is a block diagram illustrating a frame format of the radio apparatus according to a first embodiment of the present invention;
FIG. 9 is a view illustrating frequency distribution of an inverse equalization processing output value; and
FIG. 10 is a block diagram illustrating the configuration of a radio apparatus according to a second embodiment of the present invention.

Best Mode for Carrying Out the Invention

The best mode for carrying out the invention will be specifically explained with reference to the drawings.

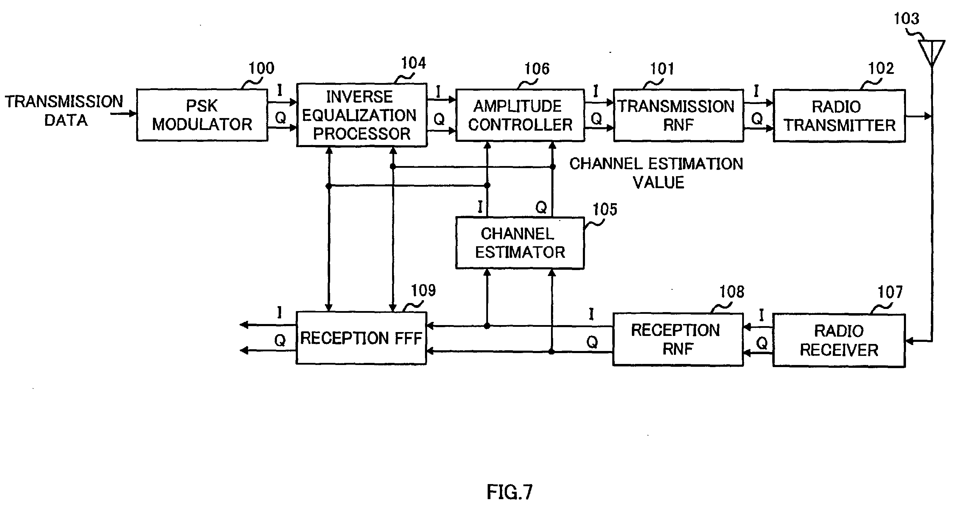

FIG. 7 is a block diagram illustrating the configuration of a radio apparatus according to a first embodiment of the present invention. The radio apparatus of this embodiment provides inverse equalization processing at the time of performing transmission. Additionally, in this figure, the same reference numerals as used in FIG. 2 are added to the portions common to FIG. 2.
In FIG. 7, the radio apparatus of this embodiment comprises a PSK modulator 100, an inverse equalization processor 104, an amplitude controller 106, a transmission RNF 101, a radio transmitter 102, an antenna 103, a channel estimator 105, a radio receiver 107, a reception RNF 108, and a reception FFF 109.
The radio receiver 107 provides quadrature detection to signals received by the antenna 103, downconverts the resultant signals into baseband signals, and outputs them. The reception RNF 108 provides root Nyquist filter processing to the outputs from the radio receiver 107. Among the outputs from the reception RNF 108, the channel estimator 105 estimates a distortion characteristic on a radio propagation path from the received signal of a unique word interval to obtain a channel estimation value. The reception FFF 109 performs filtering processing by use of FFF (Feed Forward Filter) based on the channel estimation value from the channel estimator 105 to demodulate data. The PSK modulator 100 performs phase modulation to transmission data. The inverse equalization processor 104 performs transmission inverse equalization processing using the channel estimation value from the channel estimator 105. The amplitude controller 106 controls the amplitude of the transmission signal outputted from the inverse equalization processor 104 using the channel estimation value from the channel estimator 105. The transmission RNF 101 provides root Nyquist filter processing to the transmission signal subjected to amplitude control by the amplitude controller 106 using the channel estimation value from the channel estimator 105. The radio transmitter 102 provides quadrature modulation to the output of the transmission RNF 101, upconverts the resultant into a carrier frequency, and outputs it.
The amplitude controller 106 performs control such that the output amplitude of wide dynamic range sent from the inverse equalization processor 104 falls within a predetermined dynamic range. This control is performed in the following way. Namely, frequency distribution of the output value of inverse equalization processor 104 is obtained in advance by a computer using parameters including a square sum of all tap coefficient values of digital filter, which is the channel estimation value, a square root of square sum, or a sum of absolute values. Then, control is carried out using any one of the obtained each frequency distribution.
An explanation will be next given of the operation of the above-configured radio apparatus.
The signals received by the antenna 103 are subjected to quadrature detection and the resultant signals are downconverted into I and Q baseband signals. The downconverted baseband signals are subjected to root Nyquist filter processing. Then, among the received signals subjected to root Nyquist filter processing, the distortion characteristic on the radio propagation path with respect to time of the unique word interval and the frequency is estimated from data of the unique word interval so as to obtain a channel estimation value. Then, the output signals from the reception RNF 108 are subjected to feed forward filtering and the resultant signals are demodulated based on the obtained channel estimation value.
While, transmission data is subjected to PSK modulation to be separated into I and Q signals. Then, inverse equalization processing is provided to transmission signals separated into I and Q based on the channel estimation value. This inverse equalization processing is the same as the fact that distortion is provided to the transmission signal. As is understood from the fact that the wide dynamic range is needed for the reception in the conventional radio apparatus with consideration given to a noise margin and a fading margin. This means that the wide dynamic range is also needed in the transmitting side when inverse equalization processing is provided. For this reason, in connection with the transmission signal subjected to inverse equalization processing, output amplitude is controlled to have optimal output amplitude in a predetermined dynamic range.

After the signals are subjected to root Nyquist filter processing, they are subjected to quadrature modulation, and the resultant signals are upconverted into carrier frequencies and outputted from the antenna 103.

Hereinafter, this transmitting operation is more specifically explained.

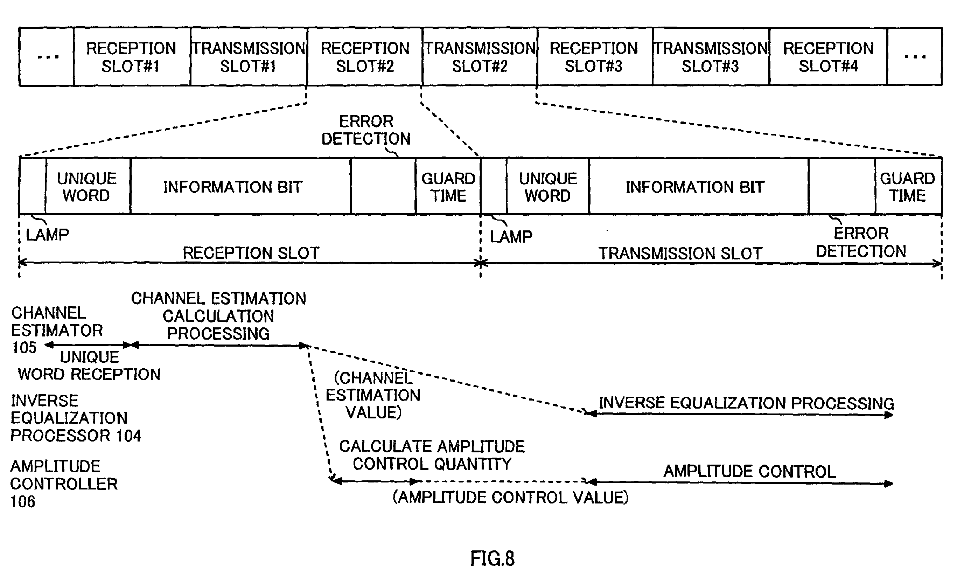

It is assumed that a frame format is formed in such a manner that reception slots and transmission slots are alternately arranged at short intervals as illustrated in FIG. 8. In connection with the reception slots, the channel estimator 105 starts estimating the distortion characteristic on the radio propagation path at the time when the unique word is received. Then, when obtaining the channel estimation value, the channel estimator 105 sends the channel estimation value to the inverse equalization processor 104 and amplitude controller 106. Additionally, it is assumed that the channel estimation value is maintained to be a fixed value in the transmission slot.

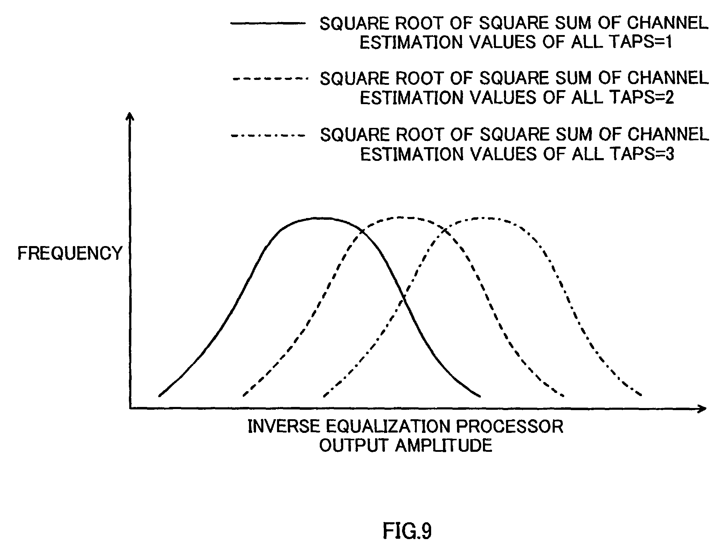

When receiving the channel estimation value from the channel estimator 105, the inverse equalization processor 104 performs inverse equalization processing using the received channel estimation value. As explained above, when the dynamic range of the output of inverse equalization processor 104 is too high or the output value of inverse equalization processor 104 is extremely low due to the channel estimation value, SNR of transmission signal is reduced. For this reason, the amplitude controller 106 performs amplitude control to the output signal of inverse equalization processor 104. Frequency distribution of the output value of inverse equalization processor 104 is obtained in advance using the channel estimation value as in FIG. 3 as a parameter, and this amplitude control is carried out based on the obtained frequency distribution. Additionally, in the case of FIG. 9, the root square of square sum of the channel estimation value is used.

Thus, according to this embodiment, the amplitude controller 106 is provided to perform amplitude control to the transmission signal sent from the inverse equalization processor 104, allowing the dynamic range to be reduced as compared with the case in which no amplitude control is performed. This makes it possible to prevent an increase in the scale of circuits after the inverse equalizer processor 104. Moreover, transmission is performed to obtain optimal transmission amplitude in the predetermined dynamic range, making it possible to prevent deterioration of SNR of transmission signal.

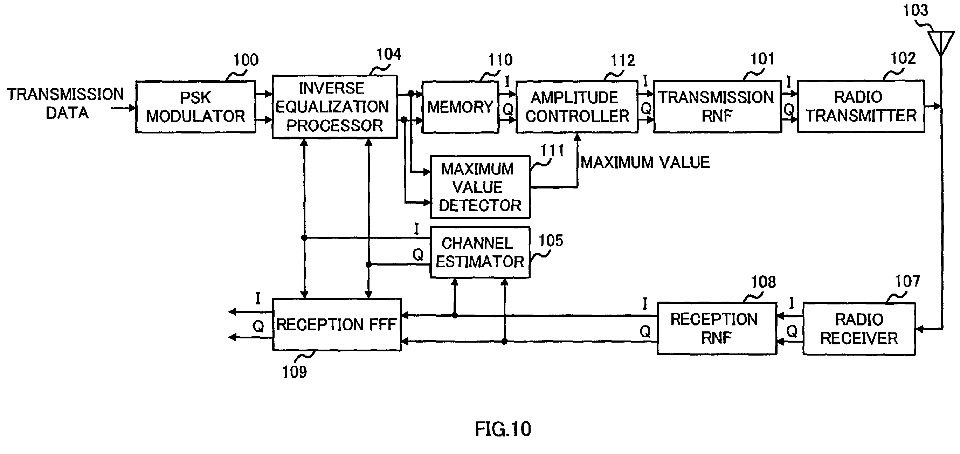

FIG. 10 is a block diagram illustrating the configuration of a radio apparatus according to a second embodiment of the present invention. Additionally, in this figure, the same reference numerals as used in FIG. 2 are added to the portions common to FIG. 2.

The transmitting apparatus of this embodiment stores transmission signals, which have been subjected to inverse equalization processing and which correspond to the amount of at least one slot, to detect a maximum value of amplitude in the slot. Then, it performs amplitude control such that amplitude subjected to inverse equalization processing falls within a predetermined dynamic range based on the maximum value to prevent an increase in the output dynamic range after the digital filter that performs inverse equalization processing and deterioration in SNR of the transmission signal. Additionally, data subjected to control is transmitted at a next transmission slot.

In FIG. 10, memory 110 stores the output values of inverse equalization processor 104, which correspond to the amount of at least one slot. A maximum value detector 111 detects a maximum value in the output values, which has been stored in memory 110 and which correspond to the amount of one slot. An amplitude controller 112 controls the output amplitude of inverse equalization processor 104 based on the maximum value detected by the maximum value detector 111.

An explanation will be next given of the transmitting operation of this radio apparatus.

The signals received by the antenna 103 are subjected to quadrature detection by the radio receiver 107, and the resultant signals are downconverted into I and Q baseband signals. The downconverted baseband signals are subjected to root Nyquist filter processing by the reception RNF 108. Next, among the received signals subjected to root Nyquist filter processing, the distortion characteristic on the radio propagation path with respect to time of the unique word interval and the frequency is estimated from data of the unique word interval so as to obtain a channel estimation value. Then, the output signals sent from the reception RNF 108 are subjected to feed forward filtering and the resultant signals are demodulated based on the obtained channel estimation value.

While, transmission data is subjected to PSK modulation and the resultant signals are separated into I and Q signals. Then, inverse equalization processing is provided to transmission signals separated into I and Q based on the channel estimation value.

Next, transmission signals, which have been subjected to inverse equalization processing and which correspond to the amount of at least one slot, are stored in the memory 110, and the maximum value is obtained. The amplitude of transmission signals stored in the memory 110 is controlled to fall within a predetermined dynamic range based on the maximum value. Then, the signal subjected to amplitude control is transmitted at a next transmission slot. Additionally, the interval between transmission slots must be shortened as compared with the variation in the distortion characteristic on the radio propagation path.

The transmission RNF 101 provides root Nyquist filter processing to the transmission signal subjected to amplitude control, and the radio transmitter 102 provides quadrature modulation to the resultant signal and upconverts the resultant signal into a carrier frequency. The upconverted signal is emitted to the air from the antenna 103.

Thus, according to the radio apparatus of this embodiment, since amplitude of the transmission signal subjected to inverse equalization processing by the inverse equalization processor 104 is controlled, it is possible to prevent an increase in the dynamic range of transmission signal occurred when inverse equalization processing is performed. This eliminates the need for providing performance to maintain the dynamic range in the circuits after the inverse equalization processor 104, making it possible to suppress the increase in the circuit scale to a minimum. Moreover, amplitude of the transmission signal is controlled to an optimal value so as to suppress deterioration of SNR of the transmission signal even when amplitude of the transmission signal after inverse equalization processing. is small. This makes it possible to prevent deterioration of the reception characteristic of the communication partner station.

Additionally, the radio apparatus of this embodiment is used in the base station apparatus and the mobile station apparatus of the mobile communication system to make it possible to miniaturize these apparatuses. Moreover, deterioration of SNR of the transmission signal can be prevented to allow communication performance to be improved.

As explained above, according to the present invention, amplitude control is performed to the transmission signal subject to inverse equalization processing, allowing the dynamic range to be reduced as compared with the case in which no amplitude control is performed. Moreover, this makes it possible to suppress an increase in the scale of circuits after the inverse equalization processing to a minimum. Still moreover, transmission is performed to obtain optimal transmission amplitude in the predetermined dynamic range, making it possible to prevent deterioration of SNR of transmission signal.

This application is based on the Japanese Patent Application No. 2000-068427 filed on March 13, 2000, entire content of which is expressly incorporated by reference herein. Industrial Applicability

The present invention is suitable for use in a mobile communication system with TDD (Time Division Duplex) communication such as a cellular phone and the like.

**Claims**

1. A transmission gain controlling method of controlling amplitude of a transmission signal subjected to inverse equalization processing by inverse equalization processing that provides a characteristic, which is opposite to a distortion characteristic on the radio propagation path received at a signal receiving time, with respect to the transmission signal based on a channel estimation value.

2. The transmission gain controlling method according to claim 1, wherein amplitude control of the transmission signal subjected to inverse equalization processing is performed based on any one of a square sum of all tap coefficient values of a digital filter, which is the channel estimation value, a square root of square sum, or a sum of absolute values.

3. The transmission gain controlling method according to claim 1, wherein amplitude control of the transmission signal subjected to inverse equalization processing is performed based on a maximum absolute value in output values corresponding to the amount of at least one slot, which is outputted from a digital filter used in inverse equalization processing.

4. A radio apparatus comprising:

channel estimating means for estimating a distortion characteristic on a radio propagation path from a received signal to output a channel estimation value;
inverse equalization processing means for providing a characteristic, which is opposite to a distortion characteristic generated on said radio propagation path, with respect to the transmission signal using the channel estimation value obtained by said channel estimating means; and
amplitude adjusting means for controlling amplitude of the transmission signal outputted from said inverse equalization processing means based on the channel estimation value obtained by said channel estimating means.

5. The radio apparatus according to claim 4, wherein said inverse equalization processing means is composed of a digital filter, and said channel estimating means performs amplitude control of the transmission signal, which is outputted from said digital filter, based on any one of a square sum of all tap coefficient values of a digital filter, which is the channel estimation value, a square root of square sum, or a sum of absolute values.

**6.** A radio apparatus comprising:

   channel estimating means for estimating a distortion characteristic on a radio propagation path from a received signal to output a channel estimation value;

   inverse equalization processing means for providing a characteristic, which is opposite to a distortion characteristic generated on said radio propagation path, with respect to the transmission signal using the channel estimation value obtained by said channel estimating means;

   storing means for storing output values of said inverse equalization processing means, which correspond to the amount of at least one slot;

   maximum value detecting means for detecting a maximum absolute value in output values of said inverse equalization processing means, which are stored in said storing means; and

   amplitude controlling means for adjusting amplitude of the output values of said inverse equalization processing means, which are stored in said storing means based on the maximum value detected by said maximum value detecting means to transmit the controlled output values of said inverse equalization processing means at timing of a next slot.

**7.** A mobile station apparatus comprising the radio apparatus described in any one of claims 4 to 6.

**8.** A base station apparatus comprising the radio apparatus described in any one of claims 4 to 6.

FIG.1

FIG.2

EP 1 178 639 A1

(a)

TRANSMITTING SIDE ←——————→ | RADIO PROPAGATION PATH | RACEIVING SIDE ←——————→

TRANSMISSION SIGNAL →→

RECEIVED SIGNAL →→

TRANSMISSION IMPULSE

IMPULSE RESPONSE

RECEIVED IMPULSE

(b)

TRANSMITTING SIDE ←——————————————→ | RADIO PROPAGATION PATH | RACEIVING SIDE ←——————→

INVERSE EQUALIZATION PROCESSING →

TRANSMISSION SIGNAL →

RECEIVED SIGNAL →→

TRANSMISSION IMPULSE

TRANSMISSION WAVEFORM

IMPULSE RESPONSE

RECEIVED IMPULSE

FIG.3

FADING COMPLEX AMPLITUDE

$R_0(t_0)$

TRANSMISSION SYMBOL

RECEPTION SYMBOL

400

401

404

402

403

T

FADING COMPLEX AMPLITUDE

$R_1(t_0)$

FADING GENERATION MODEL WHEREIN
THE MULTIPATH NUMBER IS 2
(TRANSVERSAL FILTER CONFIGURATION)

FIG.4

FADING GENERATION MODEL WHEREIN
THE MULTIPATH NUMBER IS 2
(TRANSVERSAL FILTER CONFIGURATION)

INVERSE EQUALIZATION
PROCESSING
(INFINITE IMPULSE RESPONSE (IIR)
DIGITAL FILTER CONFIGURATION)

FIG.5

TRANSMISSION SYMBOL X(t)

TAP COEFFICIENT 1/R₀(t₀)

TAP COEFFICIENT W₀(t₀)

501  504  705

502  T  706  T/2  708

503  707

TAP COEFFICIENT -R₁(t₀)

TAP COEFFICIENT W₁(t₀)

700

INVERSE EQUALIZATION PROCESSING
(INFINITE IMPULSE RESPONSE (IIR) DIGITAL FILTER+FEED FORWARD FILTER CONFIGURATION)

TRANSMISSION DATA D(t)

FADING COMPLEX AMPLITUDE R₀(t₁)

601  604

602  T  600

603

FADING COMPLEX AMPLITUDE R₁(t₁)

RECEPTION SYMBOL Y(t)

FADING GENERATION MODEL WHEREIN THE MULTIPATH NUMBER IS 2
(TRANSVERSAL FILTER CONFIGURATION)

FIG.6

EP 1 178 639 A1

FIG.7

| ... | RECEPTION SLOT#1 | TRANSMISSION SLOT#1 | RECEPTION SLOT#2 | TRANSMISSION SLOT#2 | RECEPTION SLOT#3 | TRANSMISSION SLOT#3 | RECEPTION SLOT#4 | ... |
|-----|------------------|---------------------|------------------|---------------------|------------------|---------------------|------------------|-----|

ERROR DETECTION

| | UNIQUE WORD | INFORMATION BIT | | GUARD TIME | UNIQUE WORD | INFORMATION BIT | | GUARD TIME |
|--|-------------|-----------------|--|------------|-------------|-----------------|--|------------|

LAMP

RECEPTION SLOT

LAMP

TRANSMISSION SLOT

ERROR DETECTION

CHANNEL ESTIMATOR 105

CHANNEL ESTIMATION CALCULATION PROCESSING

UNIQUE WORD RECEPTION

(CHANNEL ESTIMATION VALUE)

INVERSE EQUALIZATION PROCESSOR 104

INVERSE EQUALIZATION PROCESSING

AMPLITUDE CONTROLLER 106

CALCULATE AMPLITUDE CONTROL QUANTITY

AMPLITUDE CONTROL

(AMPLITUDE CONTROL VALUE)

FIG.8

EP 1 178 639 A1

———————— SQUARE ROOT OF SQUARE SUM OF CHANNEL
ESTIMATION VALUES OF ALL TAPS=1

-------- SQUARE ROOT OF SQUARE SUM OF CHANNEL
ESTIMATION VALUES OF ALL TAPS=2

—·——·—— SQUARE ROOT OF SQUARE SUM OF CHANNEL
ESTIMATION VALUES OF ALL TAPS=3

FREQUENCY

INVERSE EQUALIZATION PROCESSOR
OUTPUT AMPLITUDE

FIG.9

FIG.10

EP 1 178 639 A1

## INTERNATIONAL SEARCH REPORT

| International application No. |
|---|
| PCT/JP01/01807 |

**A. CLASSIFICATION OF SUBJECT MATTER**
Int.Cl⁷    H04L 27/20, H04B 7/005, H04B 7/26

According to International Patent Classification (IPC) or to both national classification and IPC

**B. FIELDS SEARCHED**

Minimum documentation searched (classification system followed by classification symbols)
Int.Cl⁷    H04L 27/00-27/20, H04B 7/005, H04B 7/26

Documentation searched other than minimum documentation to the extent that such documents are included in the fields searched
Jitsuyo Shinan Koho          1926-2001     Toroku Jitsuyo Shinan Koho  1994-2001
Kokai Jitsuyo Shinan Koho    1971-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 2000-40987, A (NEC Corporation), 08 February, 2000 (08.02.00), Figs. 1, 2   (Family: none) | 1,4,7,8 |
| Y | JP, 10-322137, A (Matsushita Electric Ind. Co., Ltd.), 04 December, 1998 (04.12.98), Fig. 2   (Family: none) | 1,4,7,8 |
| A | JP, 61-191104, A (Fujitsu Limited), 25 August, 1986 (25.08.86), Fig. 1   (Family: none) | 1-8 |

☐ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 April, 2001 (17.04.01) | 01 May, 2001 (01.05.01) |

| Name and mailing address of the ISA/ Japanese Patent Office | Authorized officer |
|---|---|
| Facsimile No. | Telephone No. |

Form PCT/ISA/210 (second sheet) (July 1992)